# EUROPÄISCHE PATENTSCHRIFT

(11) **EP 2 885 160 B1**
(45) Veröffentlichungstag und Bekanntmachung des Hinweises auf die Patenterteilung: **14.09.2016**
(21) Anmeldenummer: 13736492.3
(22) Anmeldetag: 11.07.2013
(51) Int. Cl.: B60Q 1/50, B60L 11/18, B60Q 1/38

(54) **KRAFTFAHRZEUG**
MOTOR VEHICLE
VÉHICULE AUTOMOBILE

(30) Priorität: 14.08.2012 DE 102012016040
(43) Veröffentlichungstag der Anmeldung: 24.06.2015
(73) Patentinhaber: Audi AG, 85045 Ingolstadt (DE)
(72) Erfinder: MUNTADA ROURA, Cesar, 85276 Pfaffenhofen an der IIm (DE)
(74) Vertreter: Herbst, Matthias Heinz
(86) Internationale Anmeldenummer: PCT/EP2013/002046
(87) Internationale Veröffentlichungsnummer: WO 2014/026725

(56) Entgegenhaltungen:
- WO-A2-2010/130743
- DE-A1-102010 017 759
- JP-A- 2003 235 111
- US-A1- 2009 021 364

## Beschreibung

Die Erfindung betrifft ein Kraftfahrzeug, umfassend eine durch Anschluss eines Ladekabels an eine fahrzeugseitige Anschlusseinrichtung aufladbare Energiespeichereinrichtung, eine den laufenden Ladevorgang oder zumindest den vollen Ladestatus der Energiespeichereinrichtung anzeigende optische Leuchteinrichtung, sowie am Fahrzeug seitlich verbaut Blinker.

Fahrzeuge mit Elektroantrieb, seien es Hybridfahrzeuge mit einer Kombination aus einem Verbrennungsmotor und einem Elektromotor mit zugeordneter Energiespeichereinrichtung, seien es reine Elektrofahrzeuge, sind bekannt. Ihnen gemein ist das Vorhandensein einer Energiespeichereinrichtung, also eines hinreichend aufnahmefähigen und leistungsstarken Akkumulators, in dem Energie gespeichert werden kann, die dann bei Bedarf zum Antrieb des Kraftfahrzeugs entnommen wird.

Die Energiespeichereinrichtung muss von Zeit zu Zeit geladen werden, was zumeist durch Anschluss eines Ladekabels an eine fahrzeugseitige Anschlusseinrichtung erfolgt. Das Ladekabel, das entweder von einer Haussteckdose zu der üblicherweise an der Fahrzeugseite befindlichen Anschlusseinrichtung geführt wird, oder von einer entsprechenden, speziell hierfür vorgesehenen Ladestation an einer Tankstelle, wird hierzu an die fahrzeugseitige Anschlusseinrichtung gesteckt, der Ladevorgang kann beginnen. Um den Anwender zu signalisieren, dass der Ladevorgang läuft, kann beispielsweise benachbart zur Anschlusseinrichtung eine Leuchteinrichtung wie eine kleine LED oder Ähnliches vorgesehen sein, die dies über ein Lichtsignal visualisiert. Auch kann hierüber der Ladezustand, also beispielsweise, dass der Ladevorgang beendet ist, weil die Energiespeichereinrichtung vollgeladen ist, angezeigt werden. Hierzu ist jedoch separat eine entsprechende Anzeigeeinrichtung in Form der LEDs oder Ähnliches fahrzeugseitig vorzusehen, was die Integration der LEDs sowie eine entsprechende Leitungsführung etc. mit sich bringt.

Die US 2009/021364 A1 offenbart eine Ladezustandsanzeige für ein elektrisches Fahrzeug mit einer Batterie, einem zum Erzeugen eines Ladeverbindungssignal bei einer extern angeschlossenen Leistungsquelle ausgebildeten Ladeanschluss und einer zum Erzeugen eines Ladezustandssignals ausgebildeten Ladezustandsschaltung. Dabei steuert eine Beleuchtungsschaltung die Helligkeit und die Farbe einer beleuchteten Anzeige in Abhängigkeit des Ladeverbindungssignals und des Ladezustandssignals.

Der Erfindung liegt damit das Problem zugrunde, ein Kraftfahrzeug anzugeben, das auf einfache Weise ohne spezielle, zusätzliche Leuchteinrichtung eine Signalisierung eines laufenden Ladevorgangs und/oder eines Ladestatus der Energiespeichereinrichtung ermöglicht.

Zur Lösung dieses Problems ist bei einem Kraftfahrzeug der eingangs genannten Art erfindungsgemäß vorgesehen, dass als Leuchteinrichtung ein an der Fahrzeugseite, an der sich die Anschlusseinrichtung befindet, vorgesehener Blinker dient, wobei über den Blinker zur Anzeige des laufenden Ladevorgangs ein erstes Leuchtsignal und zur Anzeige des vollen Ladezustands ein unterschiedliches zweites Leuchtsignal gebbar ist, und wobei mit dem Lösen des Ladekabels ein drittes Leuchtsignal, das das Zurückkehren des Blinkers in den normalen Betriebsmodus signalisiert, gebbar ist.

Erfindungsgemäß wird zur Signalisierung der entsprechenden Vorgänge respektive Zustände ein ohnehin bereits fahrzeugseitig verbauter Blinker genutzt. Über diesen Blinker ist es ohne Weiteres möglich, entsprechende Leuchtsignale zu geben, wenn das Ladekabel angeschlossen ist und der Ladevorgang läuft respektive die Energiespeichereinrichtung beispielsweise vollgeladen ist. Der Blinkerbetrieb wird über eine geeignete Steuerungseinrichtung gesteuert, die, wenn das Fahrzeug ausgeschaltet ist und das Anschließen des Ladekabels an der Anschlusseinrichtung erfasst ist, in einen entsprechenden Betriebsmodus geschaltet wird, in welchem dann die entsprechende Blinkeransteuerung während des gegebenen Anschlusses des Ladekabels erfolgt.

Mithin ist es also möglich, die entsprechende Visualisierung ohne Verbau zusätzlicher Anzeigeeinrichtungen oder Leuchtmittel etc. vorzunehmen, sondern sich bereits vorhandener Elemente zu bedienen.

Dabei ist erfindungsgemäß ferner vorgesehen, dass über den Blinker zur Anzeige des laufenden Ladevorgangs ein erstes Leuchtsignal und zur Anzeige des vollen Ladezustands ein unterschiedliches zweites Leuchtsignal gebbar ist. Über den Blinker ist es also möglich, unterschiedliche Leuchtsignale zu geben, was ohne Weiteres durch entsprechende Ansteuerung der im Blinker vorgesehenen Leuchtmittel möglich ist. Der laufende Ladevorgang wird beispielsweise durch rhythmisches Blinken angezeigt, während das Erreichen beispielsweise des vollen Ladezustands durch ein kontinuierliches Leuchtsignal visualisiert wird. Eine entsprechende Ansteuerung des Blinkers ist über das zugeordnete Steuergerät ohne Weiteres möglich. Grundsätzlich ist es sogar denkbar, letztlich während des laufenden Anzeigevorgangs durch Veränderung der Blinkfrequenz das Erreichen des vollen Ladezustands zu visualisieren. Ist beispielsweise die Energiespeichereinrichtung relativ leer, so blinkt der Blinker mit relativ niedriger Frequenz. Mit zunehmendem Ladevorgang und folglich Zunahme der eingespeicherten Energie kann sich die Blinkfrequenz erhöhen, bis zum Erreichen des vollen Ladezustands, wobei dann die Leuchteinrichtung konstant leuchtet.

Zusätzlich oder alternativ zur Variation zwischen einem Blinksignal und einem konstanten Leuchtsignal ist es auch denkbar, dass sich die unterschiedlichen Leuchtsignale in der Lichtfarbe unterscheiden. So ist es beispielsweise denkbar, über den Blinker ein erstes Leuchtsignal in roter Farbe zu geben, das den laufenden Ladevorgang visualisiert. Das zweite Leuchtsignal kann beispielsweise in grüner Lichtfarbe gegeben werden, es signalisiert den vollen Ladezustand.

Denkbar ist es, beispielsweise während des Ladevorgangs ein Blinksignal in roter Lichtfarbe zu geben, während ein voller Ladezustand durch konstantes Leuchten mit grüner Lichtfarbe visualisiert wird. Hier sind also die unterschiedlichen Signale sowohl hinsichtlich der Frequenz als auch der Lichtfarbe diversifiziert.

Um dem Anwender nach Beendigung des Ladevorgangs und Lösen des Ladekabels zu visualisieren, dass der Blinker respektive die Blinkersteuerung wieder in den "Normalmodus" zurückgekehrt ist, den sie während des Ladevorgangs wie ausgeführt verlassen hat, um die entsprechenden Leuchtsignale zu geben, ist zudem erfindungsgemäß vorgesehen, dass mit dem Lösen des Ladekabels ein drittes Leuchtsignal, das den normalen Betriebsmodus des Blinkers signalisiert, gebbar ist. Dieses dritte Lichtsignal wird beispielsweise in der Lichtfarbe, in der die im Normalbetrieb erzeugten Blinksignale gegeben werden, ausgegeben. D. h., dass dieses dritte Lichtsignal folglich orange bzw. gelb ist, wie eben der Blinker im Normalbetrieb, wenn er seine Richtungssignale gibt, arbeitet.

D. h., dass hier letztlich drei unterschiedliche Signale gegeben werden, nämlich ein erstes Signal betreffend den laufenden Ladevorgang, ein zweites Signal betreffend den Ladezustand, beispielsweise den vollen Ladezustand, sowie ein drittes Signal betreffend den Übergang der Blinkersteuerung in den Normalmodus.

Zur Gabe der Leuchtsignale ist es zweckmäßig, wenn im Blinker eine oder mehrere vierfarbige LEDs oder RGB-LEDs vorgesehen sind. Über solche vierfarbigen LEDs oder RGB-LEDs sind sämtliche Lichtsignale ohne Weiteres gebbar. Denn sie ermöglichen die Erzeugung entweder diskreter unterschiedlicher Farben, oder die Mischung beliebiger Farben im Falle der RGB-LEDs. D. h., dass über solche LEDs einerseits die weit häufiger zu gebenden "normalen" orangen oder gelben Blinksignale gegeben werden können, wie auch die eben bei Durchführung des Ladevorgangs zu gebenden anderen Signale in der gewünschten Lichtfarbe. Ist keine Farbvariation innerhalb der zu gebenden Signale vorgesehen, so können selbstverständlich auch normale weiße LEDs oder weiße Leuchtmittel verwendet werden, wobei sich dann die entsprechenden drei Leuchtsignale eben nur innerhalb der jeweiligen Frequenz unterscheiden.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: die Prinzipdarstellung eines erfindungsgemäßen Kraftfahrzeugs,
- Fig. 2: eine Prinzipdarstellung zum Betrieb des Blinkers während des laufenden Ladevorgangs,
- Fig. 3: eine Prinzipdarstellung zum Betrieb des Blinkers bei Erreichen des vollen Ladezustands, und
- Fig. 4: eine Prinzipdarstellung zum Betrieb des Blinkers beim Lösen des Anschlusskabels.

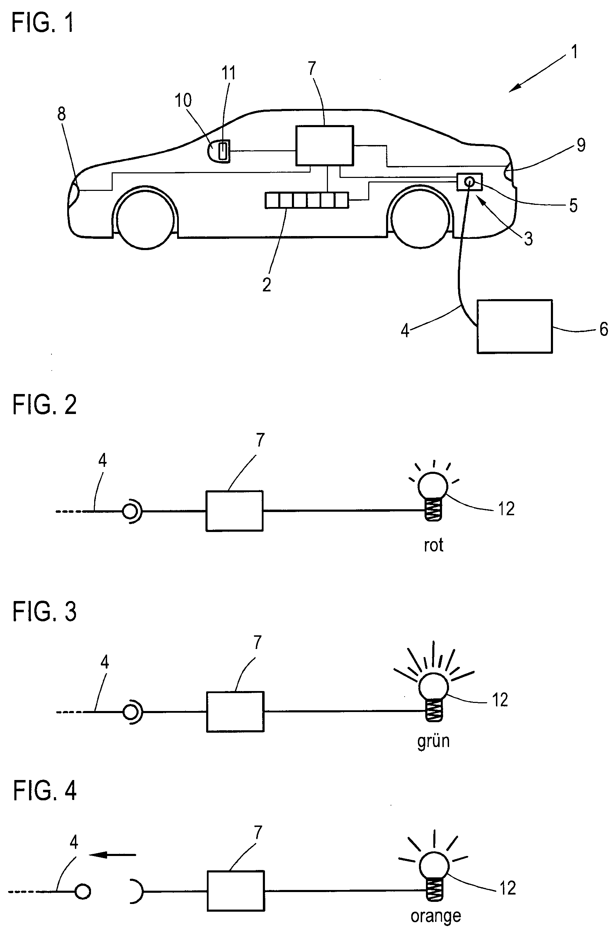

Fig. 1 zeigt ein erfindungsgemäßes Kraftfahrzeug 1, umfassend eine Energiespeichereinrichtung 2 in Form eines hinreichend dimensionierten Akkumulators sowie eine Ladeanschlusseinrichtung 3, an die im gezeigten Ausführungsbeispiel ein Ladekabel 4 über einen geeigneten Stecker 5 angeschlossen ist. Das Ladekabel 4 ist mit einer nicht näher gezeigten Stromquelle 6 verbunden, so dass über das Ladekabel 4 die Energiespeichereinrichtung 2 aufgeladen werden kann.

Vorgesehen ist ferner eine Steuerungseinrichtung 7, die der Steuerung des Leuchtbetriebs diverser Blinker dient, nämlich zum einen des vorderseitigen Blinkers 8, des rückseitigen Blinkers 9 und des im Seitenspiegel 10 befindlichen Seitenblinkers 11. Die Steuerungseinrichtung 7 kommuniziert darüber hinaus (direkt oder indirekt über andere Steuereinrichtungen, die hier nicht näher gezeigt sind) mit der Energiespeichereinrichtung 2 und erhält hierüber Informationen über den Ladezustand der Energiespeichereinrichtung 2, ob diese also nur teilweise oder vollständig geladen ist. Sie kommuniziert des Weiteren mit der Ladeanschlusseinrichtung 3 und kann erfassen, ob ein Ladekabel 4 angesteckt ist und ein Ladevorgang läuft.

Dem Anwender wird nun über die Steuerungseinrichtung 7 in Verbindung mit mindestens einem der Blinker 8, 9 oder 11 signalisiert, dass zum einen der Ladevorgang läuft und/oder dass der volle Ladezustand erfasst ist, wie ihm auch gegebenenfalls visualisiert werden kann, dass nach Beendigung des Ladevorgangs, wenn das Ladekabel 4 getrennt wird, die Blinker respektive die Steuerungseinrichtung 7 in den Normalmodus zurückkehrt, in dem der normale, übliche Blinkbetrieb erfolgen kann.

Fig. 2 zeigt als Prinzipdarstellung die Situation, dass das Ladekabel 4 an die Ladeanschlusseinrichtung 5 angesteckt ist und, da die Energiespeichereinrichtung 2 nicht voll ist, der Ladevorgang läuft. Die Steuerungseinrichtung 7 hat zum einen das Anstecken des Ladekabels 4 erfasst, was automatisch dazu führt, dass sie in einen entsprechenden Anzeigemodus wechselt, in dem über wenigstens einen der Blinker 8, 9 oder 11 entsprechende Leuchtsignale zur Information des Anwenders gegeben werden können. Sie fragt darüber hinaus kontinuierlich den Ladezustand der Energiespeichereinrichtung 2 ab, weiß also, zu wie viel Prozent die Energiespeichereinrichtung 2 geladen ist.

Unmittelbar mit Beginn des Ladevorgangs steuert die Steuerungseinrichtung 7 ein Leuchtmittel 12 eines der Blinker 8, 9 oder 11, beispielsweise das des im Seitenspiegel 10 befindlichen Blinkers 11, entsprechend an, dass ein erstes Leuchtsignal gegeben wird. Hierbei blinkt das Leuchtmittel 12, das hier als symbolisierte Glühbirne dargestellt ist. Bevorzugt handelt es sich bei dem Leuchtmittel 12 um eine LED, vorzugsweise eine RGB-LED, die die Mischung beliebiger Farben ermöglicht. Die Lichtfarbe, in der dieses den laufenden Ladevorgang visualisierenden Leuchtsignal gegeben wird, ist im gezeigten Ausführungsbeispiel rot. D. h., dass, solange der Ladevorgang läuft, mithin also die Energiespeichereinrichtung 2 nicht vollständig geladen ist, beispielsweise das Leuchtmittel 12 des Blinkers 11 rot blinkt. Die Frequenz kann konstant sein, sie kann sich aber auch mit zunehmendem Ladegrad der Energiespeichereinrichtung 2 erhöhen, d. h., dass das Blinken etwas schneller wird, um dem Anwender zu signalisieren, dass er sich dem Ende des Ladevorgangs nähert.

Ist der volle Ladezustand erreicht, so wechselt die Art des über das Leuchtmittel 12 gegebenen Leuchtsignals vom in Fig. 2 gezeigten ersten Leuchtsignal hin zu einem in Fig. 3 gezeigten zweiten Leuchtsignal. Die Steuerungseinrichtung 7 erfasst den vollen Ladezustand der Energiespeichereinrichtung 2. Unmittelbar mit diesem Erfassen steuert die Steuerungseinrichtung 7 das Leuchtmittel 12, also beispielsweise die RGB-LED, entsprechend an, dass zum einen ein konstantes Leuchtsignal gegeben wird, d. h., das Leuchtmittel 12 brennt kontinuierlich, weiterhin wird auf eine zweite Lichtfarbe, hier grün, umgeschaltet. Dieses grüne Dauerlicht signalisiert dem Anwender nun, dass der Ladevorgang abgeschlossen ist.

Fig. 4 zeigt schließlich die Situation, wenn nach erfolgreicher vollständiger Ladung das Ladekabel 4 abgezogen wird, wie durch den Pfeil gezeigt ist. Die Steuerungseinrichtung 7 erfasst sofort das Abziehen des Ladekabels 4. Mit diesem Erfassen wechselt sie wieder in den normalen "Blinkerbetriebsmodus", in dem also bei Betätigen des Blinkerhebels über die Blinker 8, 9 und 11 entsprechende Richtungssignale gegeben werden. Um dies dem Anwender zu signalisieren, dass also der "Ladeanzeigemodus" verlassen wurde, wird das Leuchtmittel 12 ein drittes Mal über die Steuerungseinrichtung 7 entsprechend angesteuert. Beispielsweise kann sie, nachdem zuvor ein konstantes grünes Lichtsignal gegeben wurde, nunmehr erneut ein Blinksignal mit oranger Lichtfarbe geben. D. h., dass die Leuchteinrichtung 12 beispielsweise drei Mal oder fünf Mal kurz und kräftig orange aufleuchtet, um dem Anwender zu signalisieren, dass der normale Blinkmodus seitens der Steuerungseinrichtung 7 wieder eingenommen wurde.

Sollte das Ladekabel 4 vor Erreichen des vollen Ladezustands abgezogen werden, so würde die Steuerungseinrichtung 7 von der in Fig. 2 gezeigten Betriebsweise, in der der noch laufende Ladevorgang durch Gabe eines roten Blinklichts visualisiert wird, unmittelbar auf die Gabe eines orangen Blinklichts, das nur wenige Male gegeben wird und in Fig. 4 gezeigt ist, wechseln, d. h., dass der in Fig. 3 gezeigte Zustand, da nicht erreicht, übersprungen wird.

Selbstverständlich ist es denkbar, die entsprechenden Signale nicht nur über einen der Blinker 8, 9 oder 11 zu geben, sondern gleichzeitig über alle. Die dort jeweils vorgesehenen Leuchtmittel würden also allesamt synchron und in gleicher Frequenz respektive mit gleicher Farbe leuchten, je nachdem, welcher Art das abzugebende Leuchtsignal ist.

Es werden also ohnehin bereits fahrzeugseitig vorhandene Signalisierungselemente, nämlich die verbauten Blinker verwendet. Wenn diese mit entsprechenden, unterschiedliche Farben erzeugenden LEDs ausgerüstet sind, sind die entsprechenden Farbwechsel ohne Weiteres darstellbar.

Für den Fall, dass keine Farb-LEDs verbaut sind, sondern einfache weiße oder orange Leuchtmittel, so kann die Diversifizierung der einzelnen in den Fig. 2 - 4 beschriebenen unterschiedlichen Signale allein durch die Leuchtfrequenz erfolgen. Beispielsweise kann die Anzeige des laufenden Ladezustands gemäß Fig. 2 mit relativ niedriger Blinkfrequenz erfolgen. Die Anzeige des vollen Ladezustands kann mit Dauerlicht erfolgen. Die Anzeige, dass wieder vom "Ladeanzeigemodus" in den normalen "Blinkmodus" seitens der Steuerungseinrichtung 7 gewechselt wurde, kann durch sehr kräftiges Blinken mit sehr kurzer Blinkfrequenz visualisiert werden.

## Patentansprüche

1. Kraftfahrzeug, umfassend eine durch Anschluss eines Ladekabels an eine fahrzeugseitige Anschlusseinrichtung aufladbare Energiespeichereinrichtung, eine den laufenden Ladevorgang oder zumindest den vollen Ladestatus der Energiespeichereinrichtung anzeigende optische Leuchteinrichtung, sowie am Fahrzeug seitlich verbaute Blinker,
die in einem Normalbetrieb entsprechende Richtungssignale geben,
**dadurch gekennzeichnet,**
**dass** als Leuchteinrichtung ein an der Fahrzeugseite, an der sich die Anschlusseinrichtung befindet, vorgesehener Blinker (8, 9, 11) dient, wobei über den Blinker (8, 9, 11) zur Anzeige des laufenden Ladevorgangs ein erstes Leuchtsignal und zur Anzeige des vollen Ladezustands ein unterschiedliches zweites Leuchtsignal gebbar ist, und wobei mit dem Lösen des Ladekabels (4) ein unterschiedliches drittes Leuchtsignal, das das Zurückkehren des Blinkers in den normalen Betriebsmodus signalisiert, gebbar ist.

2. Kraftfahrzeug nach Anspruch 1,
**dadurch gekennzeichnet,**
**dass** als unterschiedliche Leuchtsignale ein Blinksignal zur Anzeige des laufenden Ladevorgangs und ein konstantes Leuchtsignal zur Anzeige des vollen Ladezustands gebbar ist.

3. Kraftfahrzeug nach Anspruch 1 oder 2,
**dadurch gekennzeichnet,**
**dass** sich die unterschiedlichen Leuchtsignale in der Lichtfarbe unterscheiden.

4. Kraftfahrzeug nach Anspruch 3,
**dadurch gekennzeichnet,**
**dass** das erste Leuchtsignal in roter Lichtfarbe und das zweite Leuchtsignal in grüner Lichtfarbe gebbar ist.

5. Kraftfahrzeug nach einem der vorangehenden Ansprüche,
**dadurch gekennzeichnet,**
**dass** das dritte Lichtsignal in der Lichtfarbe, in der die im Normalbetrieb erzeugten Blinklichtsignale gegeben werden, gebbar ist.

6. Kraftfahrzeug nach einem der vorangehenden Ansprüche,
**dadurch gekennzeichnet,**
**dass** zur Gabe der Leuchtsignale eine oder mehrere im Blinker angeordnete vierfarbige LEDs oder RGB-LEDs (12) vorgesehen sind.

## Claims

1. Vehicle comprising an energy storage device that can be charged by connecting a charging cable to a connection device on the side of the vehicle, an optical light device indicating the current charging process or at least the fully charged state of the energy storage device, as well as an indicator on the side of the vehicle, which in normal operation gives corresponding direction signals, **characterised in that** an indicator (8, 9, 11) provided on the side of the vehicle on which the connection device is located serves as light device, wherein a first light signal can be given via the indicator (8, 9, 11) to indicate the current charging process and a different, second light signal can be given to indicate the fully charged state, and wherein when the charging cable (4) is disconnected a different, third light signal can be given that signals the return of the indicator to the normal operating mode.

2. Vehicle according to claim 1, **characterised in that** as different light signals an indicator signal can be given to indicate the current charging process and a constant light signal can be given to indicate the fully charged state.

3. Vehicle according to claim 1 or 2, **characterised in that** the different light signals differ in their colour.

4. Vehicle according to claim 3, **characterised in that** the first light signal can be given in red and the second light signal can be given in green.

5. Vehicle according to any one of the preceding claims, **characterised in that** the third light signal can be given in the colour in which the indicator signals generated in normal operation are given.

6. Vehicle according to any one of the preceding claims, **characterised in that** in order to give the light signals one or more four-colour LEDs or RGB-LEDs (12) arranged in the indicator are provided.

## Revendications

1. Véhicule automobile, comprenant un dispositif d'accumulation d'énergie pouvant être rechargé par le branchement d'un câble de charge à un dispositif de connexion du côté du véhicule, un dispositif d'éclairage optique indiquant le processus de charge en cours ou au moins l'état de charge complet du dispositif d'accumulation d'énergie, ainsi que des clignotants implantés latéralement au niveau du véhicule, qui donnent des signaux de direction correspondants dans un fonctionnement normal,
**caractérisé en ce**
**qu'**un clignotant (8, 9, 11) prévu au niveau du côté du véhicule, au niveau duquel se trouve le dispositif de connexion, sert de dispositif d'éclairage, dans lequel, pour l'indication du processus de charge en cours, un premier signal lumineux, et pour l'indication de l'état de charge complet, un deuxième signal lumineux différent peuvent être émis par l'intermédiaire du clignotant (8, 9, 11), et dans lequel avec le retrait du câble de charge (4) un troisième signal lumineux différent, qui signale le retour du clignotant dans un mode de fonctionnement normal, peut être émis.

2. Véhicule automobile selon la revendication 1,
**caractérisé en ce**
**qu'**en tant que signaux lumineux différents, un signal clignotant peut être émis pour l'indication du processus de charge en cours et un signal lumineux constant peut être émis pour l'indication de l'état de charge complet.

3. Véhicule automobile selon la revendication 1, ou 2,
**caractérisé en ce**
**que** les différents signaux lumineux se distinguent par la couleur de la lumière.

4. Véhicule automobile selon la revendication 3,
**caractérisé en ce**
**que** le premier signal lumineux peut être émis dans une couleur de lumière rouge et le deuxième signal lumineux peut être émis dans une couleur de lumière verte.

5. Véhicule automobile selon l'une des revendications précédentes,
**caractérisé en ce**
**que** le troisième signal lumineux peut être émis dans la couleur de lumière, dans laquelle les signaux lumineux clignotants générés au cours du fonctionnement normal sont émis.

6. Véhicule automobile selon l'une des revendications précédentes,
**caractérisé en ce**
**que**, pour l'émission des signaux lumineux, sont prévues une ou plusieurs diodes électroluminescentes à quatre couleurs ou diodes électroluminescentes rouge-jaune-bleu (12) disposées dans le clignotant.
